# EUROPEAN PATENT SPECIFICATION

(11) **EP 2 322 799 B1**
(45) Date of publication and mention of the grant of the patent: **23.04.2014**
(21) Application number: 09805184.0
(22) Date of filing: 05.08.2009
(51) Int. Cl.: F04B 35/04, H02K 33/04, F04B 17/04, H02K 33/02

(54) **LINEAR COMPRESSOR**
LINEARER VERDICHTER
COMPRESSEUR LINÉAIRE

(30) Priority: 07.08.2008 KR 20080077607
(43) Date of publication of application: 18.05.2011
(73) Proprietor: LG Electronics Inc., Seoul 150-010 (KR)
(72) Inventor: KANG, Kye-Lyong, Changnyeong-gun Gyeongsangnam-do 621-831 (KR); KIM, Jong-Kwon, Changwon-si Gyeongsangnam-do 641-100 (KR); PARK, Shin-Hyun, Changwon-shi, Gyungsangnam-do, 641-711, (KR); KIM, Hyun, Changwon-si Gyeongsangnam-do 641-150 (KR); KANG, Hee-Dong, Changwon-si Gyeongsangnam-do 641-711 (KR); LEE, Jeong-Uk, Jeonju-si Jeollabuk-do 560-281 (KR); JUNG, Yang-Hoon, Changwon-si Gyeongsangnam-do 641-150 (KR)
(74) Representative: Vossius & Partner
(86) International application number: PCT/KR2009/004366
(87) International publication number: WO 2010/016723

(56) References cited:
- WO-A1-88/01036
- JP-A- 2004 072 854
- KR-A- 20060 020 008
- KR-B1- 100 588 717
- KR-B1- 100 615 802
- KR-B1- 100 783 414
- US-A- 3 788 778
- US-A1- 2003 017 064

## Description

### [Technical Field]

The present invention relates to a linear compressor, and more particularly to, a linear compressor which employs a conductor member in a linear motor instead of a magnet to produce a driving force by electromagnetic induction.

### [Background Art]

In general, a compressor is a mechanical apparatus receiving power from a power generation apparatus such as an electric motor, a turbine or the like, and compressing the air, refrigerant or various operation gases to raise a pressure. The compressor has been widely used for electric home appliances such as refrigerators and air conditioners, and application thereof has been expanded to the whole industry.

The compressors are roughly classified into a reciprocating compressor, wherein a compression space to/from which an operation gas is sucked and discharged is defined between a piston and a cylinder, and the piston linearly reciprocates in the cylinder to compress refrigerant, a rotary compressor, wherein a compression space to/from which an operation gas is sucked and discharged is defined between an eccentrically-rotating roller and a cylinder, and the roller eccentrically rotates along an inside wall of the cylinder to compress refrigerant, and a scroll compressor, wherein a compression space to/from which an operation gas is sucked and discharged is defined between an orbiting scroll and a fixed scroll, and the orbiting scroll rotates along the fixed scroll to compress refrigerant.

Recently, among the reciprocating compressors, a linear compressor has been actively developed because it improves compression efficiency and provides simple construction by removing a mechanical loss caused by motion conversion by directly connecting a piston to a linearly-reciprocating driving motor.

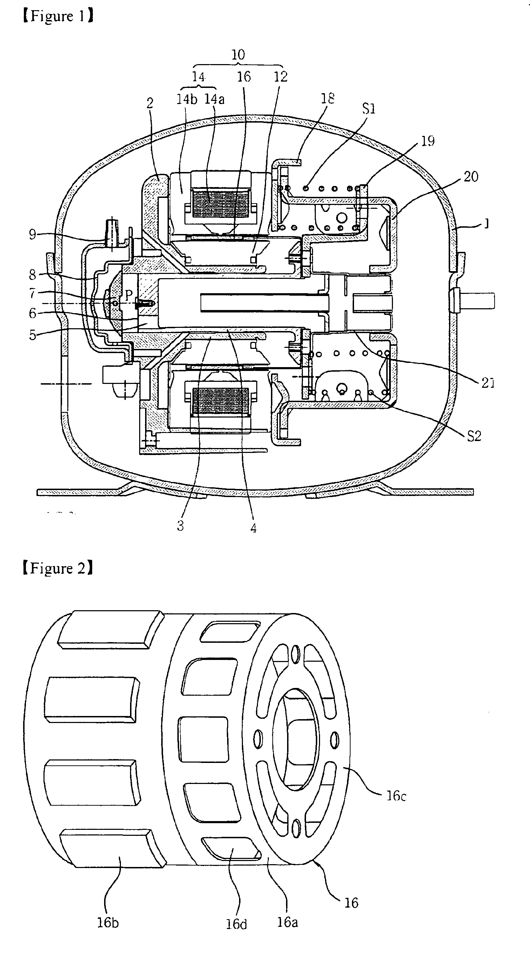

FIG. 1 is a side view illustrating a conventional linear compressor. The conventional linear compressor is installed such that a structure composed of a frame 2, a cylinder 3, a piston 4, a suction valve 6, a discharge valve 7, a linear motor 10, a motor cover 18, a supporter 19, a rear cover 20, main springs S1 and S2 and a suction muffler assembly 21 is elastically supported inside a shell 1.

The cylinder 3 is fixedly fitted into the frame 2, the discharge valve 7 is installed to block one end of the cylinder 3, the piston 4 is inserted into the cylinder 3, and the thin suction valve 6 is installed to open and close a suction hole 5 of the piston 4.

The linear motor 10 is installed such that a gap is maintained between an inner stator 12 and an outer stator 14 and a magnet frame 16 can linearly reciprocate therein. The magnet frame 16 is connected to the piston 4 by a piston fixing portion 16c, and linearly reciprocates due to a mutual electromagnetic force between the inner stator 12 and the outer stator 14 and the magnet frame 16 to operate the piston 4.

The motor cover 18 supports the outer stator 14 in an axial direction and is bolt-fixed to the frame 2 so as to fix the outer stator 14, and the rear cover 20 is coupled to the motor cover 18. The supporter 19 connected to the other end of the piston 4 is installed between the motor cover 18 and the rear cover 20 to be elastically supported by the main springs S1 and S2 in an axial direction, and the suction muffler assembly 21 which allows suction of refrigerant is also fastened with the supporter 19.

Here, the main springs S1 and S2 include four front springs S1 and four rear springs S2 in up-down and left-right symmetric positions around the supporter 19. When the linear motor 10 operates, the front springs S1 and the rear springs S2 move in opposite directions to buffer the shock of the piston 4 and the supporter 19. Moreover, refrigerant existing on the side of a compression space P serves as a kind of gas spring to buffer the shock of the piston 4 and the supporter 19.

Accordingly, when the linear motor 10 operates, the piston 4 and the suction muffler assembly 21 connected thereto linearly reciprocate, and the operations of the suction valve 6 and the discharge valve 7 are automatically controlled with variations of a pressure of the compression space P, so that the refrigerant is sucked into the compression space P via a suction tube (not shown), the suction muffler assembly 21 and the suction hole 5 of the piston 4, compressed therein, and discharged to the outside through a discharge cap 8, a loop pipe 9 and a discharge tube (not shown) on the shell side.

The linear motor 10 of the linear compressor includes the inner stator 12, the outer stator 14, and the magnet frame 16 around the frame 2 as shown in FIG. 1. The inner stator 12 is constructed such that laminations are stacked in a circumferential direction, and the outer stator 14 is constructed such that core blocks 14b are installed on a coil winding body 14a at certain intervals in a circumferential direction.

FIG. 2 is a perspective view illustrating a conventional magnet frame. The magnet frame 16 includes a cylindrical frame main body 16a positioned between the inner stator 12 and the outer stator 14 of the linear motor 10, magnets 16b fixed to some outer portions of the frame main body 16a, and a piston fixing portion 16c extended to the inside so that the piston 4 can be fixed to one end of the frame main body 16a. Holes 16d are formed on one side of the magnets 16b. Here, the magnets 16b are formed on the frame main body 16a at certain intervals in a circumferential direction. Preferably, eight magnets 16b are coupled to the outside of the frame main body 16a at regular intervals.

In the conventional linear compressor, the magnet linearly reciprocates between the inner stator and the outer stator due to a mutual electromagnetic force. However, it is difficult to employ a cylindrical magnet because of a high price of the magnet. Even if several bar-shaped magnets are fixed to form a magnet frame, the unit costs and overall costs of production still increase. Moreover, in the conventional linear compressor, the linear motor varies a stroke to modulate a cooling capacity according to a load. To this end, a complicated control unit is provided, which is accompanied with design limitations on sizes of peripheral components. Further, a complicated control method is required, which increases the costs of production and complicates a manufacturing process. Furthermore, much power is consumed for controlling, which degrades efficiency of the whole compressor.

US 3 788 778 A discloses an electrodynamic linear motor operated gas compressor comprising a stator formed with a passage extending axially therethrough, a first end member positioned on one end of said stator, a second end member positioned on the opposite end of said stator, means operable to clamp said end members against said stator, a cylinder structure including inner and outer concentrically spaced apart walls, connecting means connecting like ends of said inner and outer walls, the opposite end of said other wall being attached to said first end member, said inner wall forming a cylinder portion having a cylinder bore and including intake and exhaust valve assemblies, an armature arranged for reciprocation in the passage in said stator, a piston fixed to said armature for reciprocation in said cylinder bore, a control member fixed to said armature and having a wall portion extending axially therefrom and encircling said inner wall and terminating in a radially outwardly extending resilient means between said radial flange and said connecting means in a second resilient means intermediate said first member and said radial flange, said resilient means yieldingly opposing reciprocation of said armature having means slidably engaging said second end member and serving in conjunction with said piston to maintain said armature in spaced concentric relation to said stator, and electrical driving coils mounted in said stator member and operable when energized to effect reciprocation of said armature.

US 2003/017064 A1 discloses a linear compressor in which a driving spring and a elastic supporting member for supporting a compressing mechanism portion are disposed such that a piston and the compressing mechanism portion move in reversed phases so that vibration of a hermetic vessel is canceled out. The linear compressor comprises a hermetic vessel having a compressing mechanism portion and a linear motor therein. The linear motor comprises a mechanism member which provides the piston with reciprocating driving force and a stator which is fixed to the cylinder and which forms a reciprocation path for the mechanism member, the compressing mechanism portion and the linear motor are classified into a piston-side mechanism member and a cylinder-side mechanism member, the piston-side mechanism member includes the piston, the mechanism member and another mechanism member which is movable together with the piston and the mechanism member, the cylinder-side mechanism member includes the cylinder, the stator and another mechanism member fixed to the cylinder or the stator, the cylinder-side mechanism member is elastically supported in the hermetic vessel by the first elastic member, and a reciprocating force in the axial direction is given to the piston-side mechanism member by a second elastic member whose one end is supported by the hermetic vessel.

An object of the present invention is to provide a linear compressor which employs a conductor member instead of a magnet to simplify the shape and controlling of a linear motor.

Another object of the present invention is to provide a linear compressor which can supply a necessary cooling capacity, using a characteristic between a speed of a movable member and a force moving the movable member according to an amplitude or variation of a load.

A further object of the present invention is to provide a linear compressor which adjusts a frequency or voltage amplitude of applied power to generate a cooling capacity according to a load.

According to an aspect of the present invention, there is provided a linear compressor, including: a fixed member provided with a compression space; a movable member which linearly reciprocates inside the fixed member to compress refrigerant; one or more springs installed to elastically support the movable member in a motion direction; a stator composed of a first stator supplied with a current, and a second stator spaced apart from the first stator at a certain interval; a conductor member electromagnetically induced by a magnetic field produced by the stator to make the movable member linearly reciprocate; and a control unit which controls supply of the current with respect to the first stator.

In addition, preferably, the linear compressor further includes a connection member which connects the movable member to the conductor member, wherein the conductor member is a conductor mounted on one end of the connection member.

Moreover, preferably, the linear compressor further includes a connection member which connects the movable member to the conductor member, wherein the conductor member is formed by alternately stacking an annular iron piece and conductor, and mounted on one end of the connection member.

Further, preferably, the linear compressor further includes a connection member which connects the movable member to the conductor member, wherein the conductor member is a conductor line wound around one end of the connection member.

Furthermore, preferably, the first stator includes a coil winding body wound with a coil, and a core mounted on the coil winding body, and the control unit controls On and Off of current supply with respect to the coil winding body so as to produce a one-way magnetic field in the conductor member.

Still furthermore, preferably, the springs include one or more of a first spring installed to elastically support the movable member in a refrigerant compression direction, and a second spring installed to elastically support the movable member in the opposite direction to the refrigerant compression direction.

Still furthermore, preferably, at least some portion of the conductor member is positioned between the first stator and the second stator.

Still furthermore, preferably, the first stator includes first and second coil winding bodies spaced apart at an interval in an axial direction and wound with a coil, respectively, and a core mounted on the first and second coil winding bodies, and the control unit performs a control to supply currents having a phase difference to the first and second coil winding bodies to produce a two-way magnetic field in the conductor member.

Still furthermore, preferably, the coil is wound around the first and second coil winding bodies in the same direction, and a capacitor is connected in series to one of the first and second coil winding bodies.

Still furthermore, preferably, the control unit performs a control to supply currents having a phase difference of 90 ° to the first and second coil winding bodies.

Still furthermore, preferably, the springs include a first spring installed to elastically support the movable member in a refrigerant compression direction, and a second spring installed to elastically support the movable member in the opposite direction to the refrigerant compression direction.

Still furthermore, preferably, when the movable member operates over a certain speed, a speed of the movable member and a force moving the movable member are inversely proportional at different ratios according to an amplitude of a load.

Still furthermore, preferably, the control unit varies an amplitude of a voltage applied to the first stator according to the amplitude of the load.

Still furthermore, preferably, the control unit varies the amplitude of the voltage so that the speed reduction of the movable member can be relatively small or the force moving the movable member can be substantially maintained or increase with the increase of the load.

Still furthermore, preferably, the control unit varies a frequency according to the amplitude of the load.

Still furthermore, preferably, the control unit varies the frequency so that the speed of the movable member can increase or the force moving the movable member can be substantially maintained or increase with the increase of the load.

According to another aspect of the present invention, there is provided a linear compressor, including: a fixed member provided with a compression space; a movable member which is provided with a conductor member, and linearly reciprocates inside the fixed member to compress refrigerant; a plurality of springs installed to elastically support the movable member in a motion direction; a first stator applied with a current to magnetically induce the conductor member; a second stator positioned corresponding to the first stator so that at least some portion of the conductor member can be positioned in a space between the first stator and the second stator; and a control unit which varies one or more of an amplitude and frequency of power applied to the first stator according to an amplitude of a load to control a cooling capacity according to the load.

### [Advantageous Effects]

According to the present invention, since the linear motor employs the conductor member instead of the magnet to supply a driving force by magnetic induction, the mechanism and controlling thereof are simplified, so that the costs of production are cut down. Moreover, since the linear motor can be driven by minimum elements without a special driving unit for controlling, it is possible to improve entire efficiency.

In addition, according to the present invention, the linear compressor varies one or more of the voltage and the frequency, using the characteristic between the speed of the movable member and the force moving the movable member according to variations of the load, to thereby supply a necessary cooling capacity.

Moreover, according to the present invention, the linear compressor adjusts the frequency or the voltage amplitude of applied power to generate a cooling capacity according to the load.

### [Description of Drawings]

FIG. 1 is a side view illustrating a conventional linear compressor;
FIG. 2 is a perspective view illustrating a conventional magnet frame;
FIG. 3 is a side-sectional view illustrating a first embodiment of a linear compressor according to the present invention;
FIG. 4 is a side-sectional view illustrating a second embodiment of the linear compressor according to the present invention;
FIG. 5 is a side-sectional view illustrating a third embodiment of the linear compressor according to the present invention;
FIG. 6 is a perspective view illustrating a first embodiment of a conductor member applied to the linear compressor according to the present invention;
FIG. 7 is a perspective view illustrating a second embodiment of the conductor member applied to the linear compressor according to the present invention;
FIG. 8 is a perspective view illustrating a third embodiment of the conductor member applied to the linear compressor according to the present invention;
FIG. 9 is a graph showing magnetic flux waveforms of a linear motor shown in FIG. 5 by an applied current;
FIG. 10 is a schematic circuit view for applying a current to the linear motor shown in FIG. 5;
FIG. 11 is a graph showing linear reciprocation magnetic flux operations of the linear motor shown in FIG. 5;
FIG. 12 is a graph showing the relation between a slip and a torque of the linear motor shown in

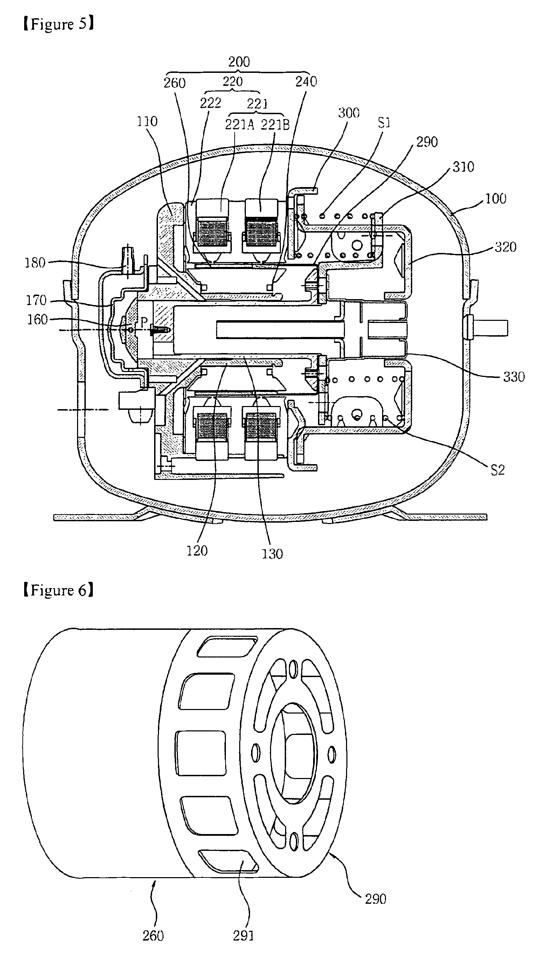

FIG. 5 in variations of a voltage; and

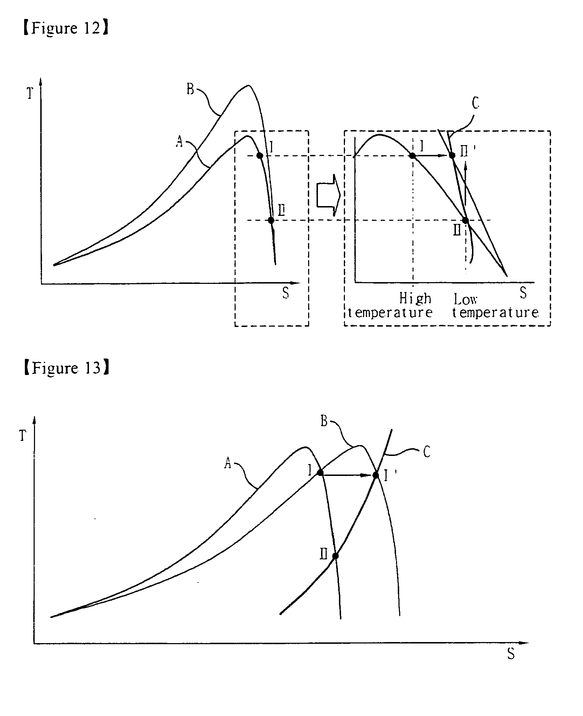

FIG. 13 is a graph showing the relation between the slip and the torque of the linear motor shown in FIG. 5 in variations of a frequency.

### [Mode for Invention]

Hereinafter, the present invention will be described in detail with reference to embodiments and drawings.

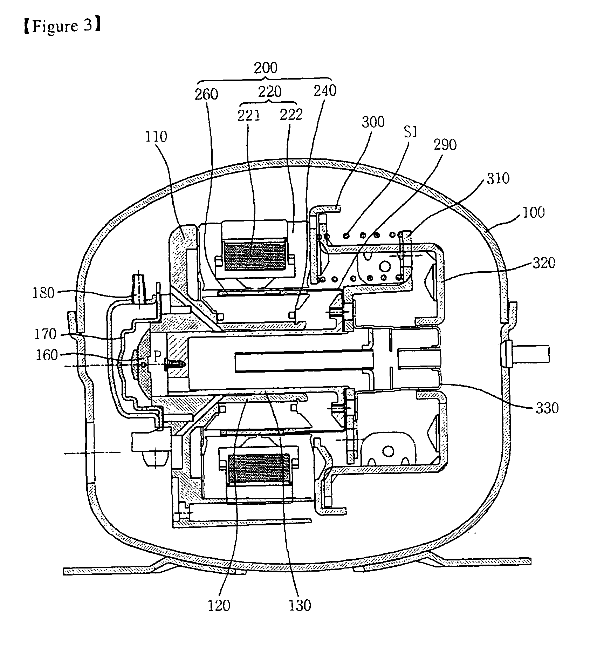

FIGS. 3 to 5 are side-sectional views illustrating various embodiments of a linear compressor according to the present invention.

As illustrated in FIGS. 3 to 5, the linear compressor according to the present invention is constructed such that a fixed member 120 provided with a compression space P of refrigerant, a movable member 130 compressing refrigerant in the fixed member 120, and a linear motor 200 driving the movable member 130 are installed in a hermetic container 100. The linear motor 200 includes first and second stators 220 and 240, and a conductor member 260 positioned in a space between the first and second stators 220 and 240.

The second stator 240 is fixed to an outer circumference of the fixed member 120, and the first stator 220 is fixed in an axial direction by a frame 110 and a motor cover 300. Since the frame 110 and the motor cover 300 are fastened and coupled to each other by a fastening member such as a bolt, the first stator 220 is fixed between the frame 110 and the motor cover 300. The frame 110 may be formed integrally with the fixed member 120, or manufactured individually from the fixed member 120 and coupled to the fixed member 120.

A supporter 310 is connected to the rear of the movable member 130, and a rear cover 320 is coupled to the rear of the motor cover 300. The supporter 310 is positioned between the motor cover 300 and the rear cover 320. Springs S1 and S2 are installed in an axial direction to buffer the shock of the linear reciprocation of the movable member 130 with both ends supported by the supporter 310 and the motor cover 300 or the supporter 310 and the rear cover 320. Here, detailed installation positions and elastic moduli of the springs S1 and S2 may be changed according to the construction and operation of the linear motor 200, which will be described below in detail.

In addition, a suction muffler 330 is provided at the rear of the movable member 130. The refrigerant is introduced into the movable member 130 through the suction muffler 330, thereby reducing refrigerant suction noise.

Some portion of a front end of the movable member 130 has a hollow so that the refrigerant introduced through the suction muffler 330 can be introduced into and compressed in the compression space P defined between the fixed member 120 and the movable member 130. A suction valve (not shown) is installed at the front end of the movable member 130. The suction valve (not shown) opens the front end of the movable member 130 so that the refrigerant can flow from the movable member 130 to the compression space P, and closes the front end of the movable member 130 so that the refrigerant cannot flow back from the compression space P to the movable member 130.

When the refrigerant is compressed over a defined pressure in the compression space P by the movable member 130, a discharge valve 160 positioned at a front end of the fixed member 120 is open. The high-pressure compressed refrigerant is discharged to a discharge cap 170, discharged again to the outside of the linear compressor through a loop pipe 180, and circulated in a freezing cycle.

The linear motor 200 includes the first stator 220 through which a current flows, the second stator 240 maintaining a gap from the first stator 220, and the conductor member 260 installed maintaining a gap between the first and second stators 220 and 240, and magnetically induced by the first stator 220 to make the movable member 130 linearly reciprocate. The linear motor 200 includes a control unit (not shown) which controls supply of a current with respect to the first stator 220. Here, the first stator 220 is an outer stator relatively distant from the fixed member 120, and the second stator 240 is an inner stator mounted on the fixed member 120.

The linear motor 200 of the linear compressor so constructed is a linear motor 200 provided with two stators 220 and 240, but a general linear motor 200 provided with only one current-flowing stator 220 also belongs to the scope of the present invention. In addition, the linear compressor may include a power unit (not shown) which can receive power from the outside. As the power unit is an element obvious to a person of ordinary skill in the art, explanations thereof are omitted.

As illustrated in FIG. 3, an embodiment of the first stator 220 is constructed such that core blocks 222 are mounted on one coil winding body 221 wound with a coil in a circumferential direction. The control unit controls On/Off of current supply with respect to the coil winding body 221 so as to produce a one-way magnetic field in the conductor member 260, and produces a force so that the conductor member 260 can move in a refrigerant compression direction, i.e., a top dead center direction. Here, preferably, only the front main springs S1 are installed between the motor cover 300 and the supporter 310 to grant a restoration force against a force applied to the movable member 130 by the linear motor 200. In addition, preferably, the elastic modulus and number of the front main springs S1 are determined to be proportional to the coil winding number of the coil winding body 221.

Accordingly, when the current is input to the coil winding body 221, a magnet flux forms a closed circuit along the first and second stators 220 and 240 due to the current flowing through the coil winding body 221. Since an induction field is produced in the conductor member 260 due to the magnetic flux, the force is applied in a top dead center direction, so that the conductor member 260 and the movable member 130 move in the top dead center direction to compress the refrigerant. Next, when the current is not input to the coil winding body 221, the magnet flux and the induction field are vanished, and the conductor member 260 and the movable member 130 move in a bottom dead center direction due to the restoration force of the front main springs S1. Such a process is repeated to suck, compress and discharge the refrigerant.

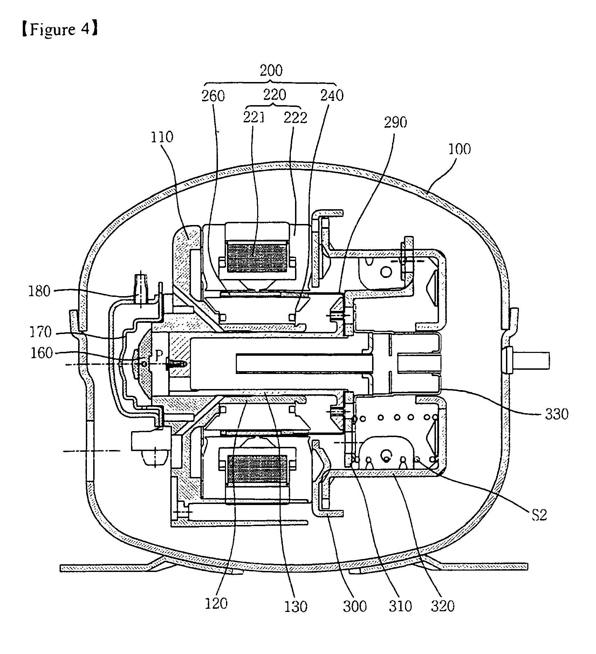

As illustrated in FIG. 4, another embodiment of the first stator 220 is constructed such that core blocks 222 are mounted on one coil winding body 221 wound with a coil in a circumferential direction like the above embodiment. The control unit controls On/Off of current supply with respect to the coil winding body 221 so as to produce a one-way magnetic field in the conductor member 260, and produces a force so that the conductor member 260 can move in a refrigerant suction direction, i.e., a bottom dead center direction unlike the above embodiment. Here, preferably, only the rear main springs S2 are installed between the supporter 310 and the rear cover 320 to grant a restoration force against a force applied to the movable member 130 by the linear motor 200. Moreover, preferably, the elastic modulus and number of the rear main springs S2 are determined to be proportional to the coil winding number of the coil winding body 221 as in the above embodiment.

Therefore, when the current is input to the coil winding body 221, a magnet flux forms a closed circuit along the first and second stators 220 and 240 due to the current flowing through the coil winding body 221. Since an induction field is produced in the conductor member 260 due to the magnetic flux, the force is applied in a bottom dead center direction, so that the conductor member 260 and the movable member 130 move in the bottom dead center direction to suck the refrigerant. Next, when the current is not input to the coil winding body 221, the magnet flux and the induction field are vanished, and the conductor member 260 and the movable member 130 move in a top dead center direction due to the restoration force of the rear main springs S2. Such a process is repeated to suck, compress and discharge the refrigerant.

As illustrated in FIG. 5, a further embodiment of the first stator 220 is constructed such that first and second coil winding bodies 221A and 221B wound with a coil in a circumferential direction are positioned at a certain interval in an axial direction, and core blocks 222 are mounted on the first and second coil winding bodies 221A and 221B. The coil is wound around the first and second coil winding bodies 221A and 221B in the same direction. The control unit performs a control to supply currents having a phase difference of 90 ° to the first and second coil winding bodies 221A and 221B, respectively, to produce a two-way magnetic field in the conductor member 260, and repeats a process of producing a force so that the conductor member 260 can move in a refrigerant compression direction, i.e., a top dead center direction, and producing a force so that the conductor member 260 can move in a refrigerant suction direction, i.e., a bottom dead center direction.

Here, preferably, the front main springs S1 are installed between the motor cover 300 and the supporter 310 and the rear main springs S2 are installed between the supporter 310 and the rear cover 320 to grant a restoration force against a force applied to the movable member 130 by the linear motor 200. In addition, preferably, the elastic modulus and number of the front main springs S1 and the rear main springs S2 are determined to be proportional to the coil winding number of the first and second coil winding bodies 221A and 221B.

Accordingly, when the current is input to the first coil winding body 221A, as the currents having AC waveforms with a phase difference of 90 ° are input to the first and second coil winding bodies 221A and 221B, the magnetic flux also has AC waveforms. Since an induction field is produced in the conductor member 260 due to the magnetic flux, the force is applied alternately in top and bottom dead center directions, so that the conductor member 260 and the movable member 130 repeat a process of moving in the top dead center direction to compress the refrigerant and moving in the bottom dead center direction to suck the refrigerant.

The construction and operation of the conductor member 260 applied to the linear compressor so constructed will be described below in more detail.

FIGS. 6 to 8 are perspective views illustrating various embodiments of the conductor member applied to the linear compressor according to the present invention.

As illustrated in FIG. 6, an embodiment of the conductor member 260 is formed of a conductor material such as Cu and Al in a shape corresponding to a connection member 290, e.g., a cylindrical shape. Here, the conductor member 260 is mounted on one end of the connection member 290 by an adhesive or an adhesion member, and the connection member 290 is installed to connect the conductor member 260 to the movable member 130. Surely, the connection member 290 has the same construction as the conventional one, and has various holes 291 in portions other than the mounting portion of the conductor member 260 to reduce a passage resistance or radiate heat.

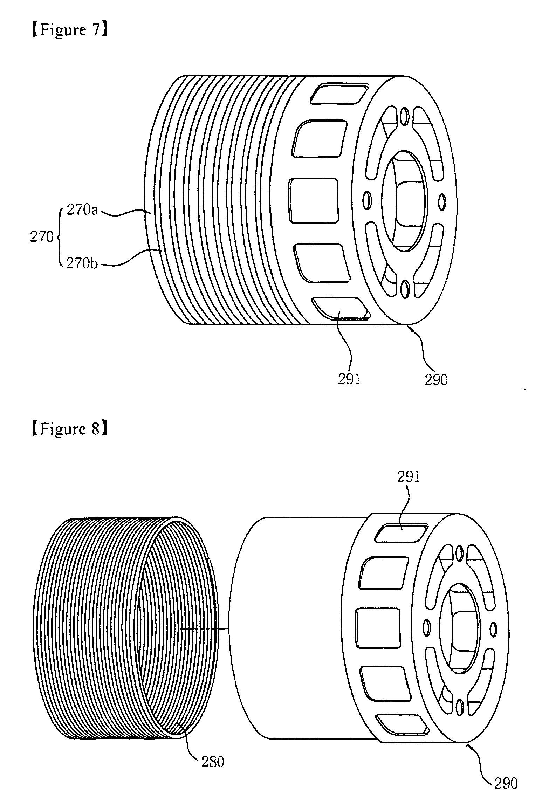

As illustrated in FIG. 7, another embodiment of the conductor member 270 is formed in a cylindrical shape by alternately stacking an annular iron piece 270a and a ring conductor 270b. Like the above embodiment, the conductor member 270 is mounted on one end of a connection member 290 by an adhesive or an adhesion member, and the connection member 290 is installed to connect the conductor member 270 to the movable member 130. The ring conductor 270b may be formed of a conductor material such as Cu and Al.

As illustrated in FIG. 8. a further embodiment of the conductor member 280 is formed by winding a conductor line. The conductor member 280 is mounted to be wound around the outside of one end of a connection member 290 or the outside of the connection member 290, and the connection member 290 is installed to connect the conductor member 280 to the movable member 130.

The conductor members 260, 270 and 280 shown in FIGS. 6 to 8 are preferably formed of Al or Cu, and have the feature of being magnetically induced by an electromagnetic force. Since the conductor members 260, 270 and 280 are applied to the linear motor 200, the present invention can more reduce manufacturing expenses than the prior art using the magnet.

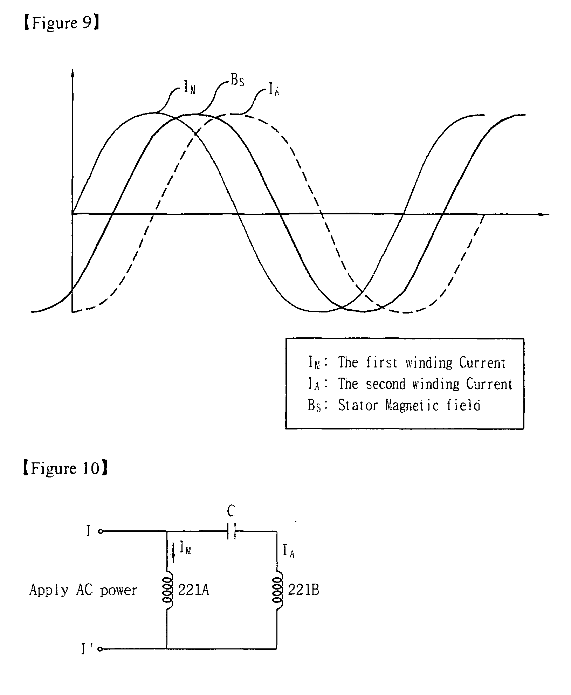

FIG. 9 is a graph showing magnetic flux waveforms of the linear motor shown in FIG. 5 by an applied current. When the control unit applies power to the linear motor 200 including the first and second coil winding bodies 221A and 221B, with respect to currents flowing through the first stator 220, a current I_{M} of the first coil winding body 221A and a current I_{A} of the second coil winding body 221B have AC waveforms with a phase difference of 90 °. Therefore, a synthetic magnetic field B_{S} of the first stator 220 by the current shows AC waveforms. The produced magnetic field linearly reciprocates, alternated in positive and negative directions like the waveforms of the currents I_{M} and I_{A}.

FIG. 10 is a schematic circuit view for applying a current to the linear motor shown in FIG. 5. For example, when an AC current is applied to a terminal I-I', the current I_{A} applied to the second coil winding body 221A is the AC current applied through a capacitor C, and has a phase difference of 90 ° from the current I_{M} applied to the first coil winding body 221A.

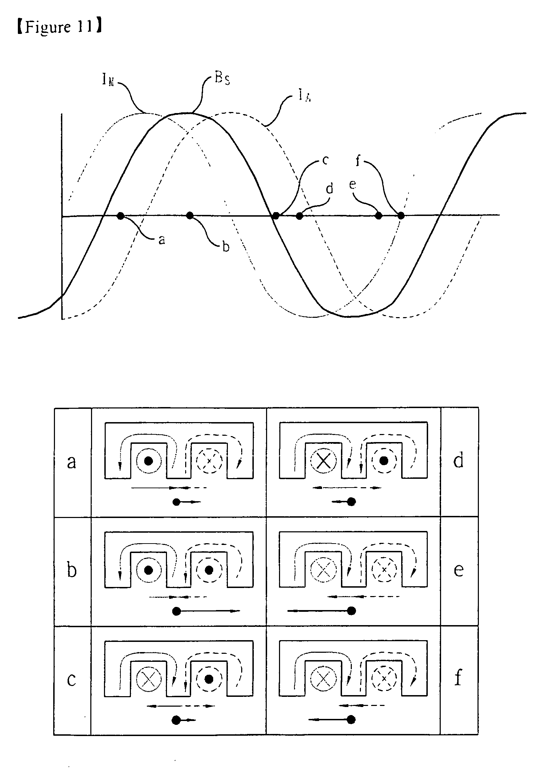

FIG. 11 is a graph showing linear reciprocation magnetic flux operations of the linear motor shown in FIG. 5. FIG. 11 provides a graph showing the current I_{M} of the first coil winding body 221A, the current I_{A} of the second coil winding body 221B, and the synthetic magnetic field B_{S} of the first stator 220 in the application of the current, and a table showing the linear reciprocation magnetic flux operations of the linear motor 200 in points a to f existing in one period. That is, the table of FIG. 11 shows that the first and second coil winding bodies 221A and 221B are repeatedly magnetized into N-S and S-N poles in the points a to f according to the applied voltage.

More specifically, in the points a, b and c, B_{S} which is the sum of I_{M} and I_{A} appears in a positive direction, i.e., an N pole, and an amplitude thereof increases and then decreases, and in the points d, e and f, B_{S} which is the magnetic field sum of I_{M} and I_{A} appears in a negative direction, i.e., an S pole, and an amplitude thereof increases and then decreases. As noted above, the magnetic flux is alternated in the positive/negative directions by the first coil winding body 221 A and the second coil winding body 221 B, and the electromagnetic force of the first and second stators 220 and 240 and the induction field of the conductor member 260 interwork with each other.

FIG. 12 is a graph showing the relation between a slip and a torque of the linear motor shown in FIG. 5 in variations of a voltage, and FIG. 13 is a graph showing the relation between the slip and the torque of the linear motor shown in FIG. 5 in variations of a frequency. In the linear compressor, when a load increases, a refrigerant gas is expanded, so that a speed of the movable member 130 decreases. The linear compressor varies the voltage or the frequency according to the load to control the speed of the movable member 130, thereby compensating for decrease of a cooling capacity caused by the speed reduction of the movable member 130. The right-side graph of FIG. 2 is an enlarged view of a portion of the left-side graph.

Therefore, when the linear compressor designed to vary the voltage or the frequency according to the load is applied to e.g., a refrigerator, the linear motor 200 automatically regulates a freezing capacity, and the refrigerator naturally modulates the cooling capacity according to the load.

When the linear motor 200 adopting the conductor member 260 operates, the relation between the slip which is the speed of the movable member 130 and the torque which is the force moving the movable member 130 will be examined in more detail. As illustrated in FIGS. 12 and 13, when the linear motor 200 is initially driven, the slip and the torque rise to be proportional. When the linear motor 200 stably operates in a slip of over a certain value or a set value, the slip and the torque are inversely proportional regardless of the load.

As illustrated in FIG. 12, A represents an S-T curve in a first voltage, B represents an S-T curve in a second voltage higher than the first voltage, and C represents an S-T curve using a variable voltage. Here, the refrigerant inside the linear compressor is expanded in a high temperature state, so that an elastic modulus of the refrigerant gas increases. As a result, driving the linear motor 200 in a slip identical to that of a low temperature state requires more force in the high temperature state. The high temperature state slip is smaller than the low temperature state slip in the same torque.

Accordingly, when the load increases, e.g., when an ambient temperature rises from a low to high temperature, the control unit varies the voltage input to the linear motor 200, so that the S-T characteristic moves following curve C as shown in FIG. 12. Here, if the control unit does not adjust the voltage, the S-T characteristic moves from a low temperature region II of curve A to a high temperature region I of curve A. However, when the control unit adjusts the voltage, e.g., when the control unit varies power applied to the linear motor 200 from the first voltage to the second voltage, the stroke of the movable member 130 is identically maintained, and the speed of the movable member 130 increases, so that the high temperature region I of curve A is changed into a high temperature region II' of curve B. Therefore, the S-T characteristic moves from the low temperature region II of curve A to the high temperature region II' of curve B, i.e., moves following curve C.

As described above, when the S-T characteristic moves from the low temperature region II to the high temperature region II' following curve C, the slip relatively less decreases or decreases, and the torque is maintained to be substantially identical or increases, so that the stroke of the movable member 130 increases. Accordingly, the reduction of the cooling capacity caused by the decrease of the slip is compensated for by the increase of the stroke of the movable member 130, thereby modulating the cooling capacity. The voltage of the linear motor 200 may vary from the second voltage to the first voltage to modulate the cooling capacity.

The control unit is constructed to control an AC chopper unit and a triac unit so as to vary the voltage applied to the linear motor 200 as noted. A mechanism insensitive to voltage variations is designed to control the voltage to be appropriate for the cooling capacity required in the linear compressor, to thereby ensure modulation of the cooling capacity. That is, when judging the load as an overload, the control unit applies a voltage to delay the time to turn on the AC chopper unit and the triac unit in a refrigerant suction stroke or to advance the time to turn on the AC chopper unit and the triac unit in a refrigerant compression stroke. On the contrary, when judging the load as a low load, the control unit applies a voltage to advance the time to turn on the AC chopper unit and the triac unit in the refrigerant suction stroke or to delay the time to turn on the AC chopper unit and the triac unit in the refrigerant compression stroke.

As illustrated in FIG. 13, A represents an S-T curve in a first frequency, B represents an S-T curve in a second frequency higher than the first frequency, and C represents an S-T curve using a variable frequency. Here, the refrigerant inside the linear compressor is expanded in a high temperature state, so that an elastic modulus of the refrigerant gas increases. Consequently, driving the linear motor 200 in a slip identical to that of a low temperature state requires more force in the high temperature state. The high temperature state slip is smaller than the low temperature state slip in the same torque.

Accordingly, when a load increases, e.g., when an ambient temperature rises from a low to high temperature, the control unit varies the frequency input to the linear motor 200, so that the S-T characteristic moves following curve C as shown in FIG. 13. Here, if the control unit does not adjust the frequency, the S-T characteristic moves from a low temperature region II of curve A to a high temperature region I of curve A. However, when the control unit adjusts the frequency, i.e., when the control unit supplies power varying from the first frequency to the second frequency to the linear motor 200 to prevent variations of the force moving the movable member 130, the stroke of the movable member 130 is identically maintained, and the speed of the movable member 130 increases, so that the high temperature region I of curve A is changed into a high temperature region I' of curve B. As a result, the S-T characteristic moves from the low temperature region II of curve A to the high temperature region I' of curve B, i.e., moves following curve C.

As described above, when the S-T characteristic moves from the low temperature region II to the high temperature region I' following curve C, the slip increases, or the torque is maintained to be substantially identical or increases, so that the stroke of the movable member 130 increases to thereby modulate the cooling capacity. In addition, power varying from the second frequency to the first frequency may be applied to the linear motor 200 to reduce the cooling capacity.

The control of the voltage amplitude and the control of the frequency amplitude may be simultaneously, selectively or alternately performed.

The control unit is constructed to control an inverter unit so as to vary the frequency applied to the linear motor 200 as noted. The inverter unit includes a rectification unit which rectifies AC power, and an inverter element which converts a rectified voltage from the rectification unit into an AC voltage according to a control signal. The inverter unit applies power to the linear motor 200 according to a control frequency by the control signal. Surely, the inverter unit may apply power according to a control voltage.

The AC chopper method and the triac phase control method which are the methods using applied voltage variations, and the inverter method which is the method using applied frequency variations are nothing but examples of the control methods for modulating the cooling capacity according to the load. Besides, methods for naturally modulating a cooling capacity can also be used, such as a direct application method which is a mechanical design method optimizing the relation between a slip and a torque regardless of a load, and a current direct application method which is a mechanical design method using a mechanical resonance frequency varied according to a load.

While the present invention has been described in connection with the preferred embodiments, the present invention is not limited thereto and is defined by the appended claims. Therefore, it will be understood by those skilled in the art that various modifications and changes can be made thereto without departing from the scope of the invention defined by the appended claims.

## Claims

1. A linear compressor, comprising:
a fixed member (120) provided with a compression space (P);
a movable member (130) which linearly reciprocates inside the fixed member (120) to compress refrigerant;
one or more springs (S1, S2) installed to elastically support the movable member (130) in a motion direction;
a stator composed of a first stator (220) supplied with a current, and a second stator (240) spaced apart from the first stator (220) at a certain interval;
a conductor member (260, 270, 280) electromagnetically induced by a magnetic field
produced by the stator to make the movable member (130) linearly reciprocate; and
a control unit which controls supply of the current with respect to the first stator (220), **characterized in that** when the movable member operates over a certain speed, a speed of the movable member and a force moving the movable member are inversely proportional at different ratios according to an amplitude of a load.

2. The linear compressor of claim 1, further comprising a connection member (290) which connects the movable member (130) to the conductor member,
wherein the conductor member (260) is a conductor mounted on one end of the connection member (290).

3. The linear compressor of claim 1 or 2, further comprising a connection member (290) which connects the movable member (130) to the conductor member (270),
wherein the conductor member is formed by alternately stacking an annular iron piece and conductor (270b), and mounted on one end of the connection member (290).

4. The linear compressor of any one of claims 1 to 3, further comprising a connection member (290) which connects the movable member (130) to the conductor member (280), wherein the conductor member (280) is a conductor line wound around one end of the connection member (290).

5. The linear compressor of any one of claims 1 to 4, wherein the first stator (220) comprises a coil winding body (221) wound with a coil, and a core (222) mounted on the coil winding body (221), and the control unit controls On and Off of current supply with respect to the coil winding body (221) so as to produce a one-way magnetic field in the conductor member (260, 270, 280).

6. The linear compressor of any one of claims 1 to 5, wherein at least some portion of the conductor member (260, 270, 280) is positioned between the first stator and the second stator (220, 240).

7. The linear compressor of claim 6, wherein the first stator (220) comprises first and second coil winding bodies (221A, 2221B) spaced apart at an interval in an axial direction and wound with a coil, respectively, and a core (222) mounted on the first and second coil winding bodies (221A, 221B), and the control unit performs a control to supply currents having a phase difference to the first and second coil winding bodies (221A, 221B) to produce a two-way magnetic field in the conductor member (260, 270, 280).

8. The linear compressor of claim 7, wherein the coil is wound around the first and second coil winding bodies (221A, 221B) in the same direction, and a capacitor is connected in series to one of the first and second coil winding bodies (221 A, 221B).

9. The linear compressor of claim 8, wherein the control unit performs a control to supply currents having a phase difference of 90 ° to the first and second coil winding bodies (221A, 221B).

10. The linear compressor of claim 1, wherein, the control unit varies a frequency according to the amplitude of the load.

11. The linear compressor of claim 10, wherein the control unit varies an amplitude of a voltage applied to the first stator according to the amplitude of the load.

12. The linear compressor of any one of claims 1 to 11, wherein
the springs (S1, S2 are a plurality of springs (S1, S2),
the first stator (220) is applied with a current to magnetically induce the conductor member (260, 270, 280),
the second stator (240) is positioned corresponding to the first stator (220) so that at least some portion of the conductor member (260, 270, 280) can be positioned in a space between the first stator and the second stator (220, 240), and
the control unit varies one or more of an amplitude and frequency of power applied to the first stator (220) according to an amplitude of a load to control a cooling capacity according to the load.

13. The linear compressor of claim 12, wherein the control unit varies the amplitude of the voltage so that the speed reduction of the movable member (130) can be relatively small or the force moving the movable member (130) can be substantially maintained or increase with the increase of the load.

14. The linear compressor of claim 12, wherein the control unit varies the frequency so that the speed of the movable member (130) can increase or the force moving the movable member (130) can be substantially maintained or increase with the increase of the load.

## Patentansprüche

1. Linearer Verdichter, der aufweist:
ein festes Element (120), das mit einem Verdichtungsraum (P) versehen ist;
ein bewegliches Element (130), das sich im Inneren des festen Elements (120) linear hin und her bewegt, um Kältemittel zu verdichten;
eine oder mehrere Federn (S1, S2), die installiert sind, um das bewegliche Element (130) in einer Bewegungsrichtung elastisch zu halten;
einen Stator, der aus einem mit einem Strom versorgten ersten Stator (220) und aus einem von dem ersten Stator (220) um einen bestimmten Abstand beabstandeten zweiten Stator (240) besteht;
ein Leiterelement (260, 270, 280), das von einem von dem Stator erzeugten Magnetfeld elektromagnetisch angeregt wird, um das bewegliche Element (130) dazu zu bringen, sich linear hin und her zu bewegen; und
eine Steuereinheit, welche die Zuführung des Stroms in Bezug auf den ersten Stator (220) steuert, **dadurch gekennzeichnet, dass** eine Geschwindigkeit des beweglichen Elements und eine das bewegliche Element bewegende Kraft gemäß einer Amplitude einer Last in unterschiedlichen Verhältnissen umgekehrt proportional sind, wenn das bewegliche Element mit einer bestimmten Geschwindigkeit arbeitet.

2. Linearer Verdichter nach Anspruch 1, der ferner ein Verbindungselement (290) aufweist, welches das bewegliche Element (130) mit dem Leiterelement verbindet,
wobei das Leiterelement (260) ein Leiter ist, der an ein Ende des Verbindungselements (290) montiert ist.

3. Linearer Verdichter nach Anspruch 1 oder 2, der ferner ein Verbindungselement (290) aufweist, welches das bewegliche Element (130) mit dem Leiterelement (270) verbindet,
wobei das Leiterelement durch abwechselndes Stapeln eines ringförmigen Eisenstücks und eines Leiters (270b) gebildet wird, und an ein Ende des Verbindungselements (290) montiert wird.

4. Linearer Verdichter nach einem der Ansprüche 1 bis 3, der ferner ein Verbindungselement (290) aufweist, welches das bewegliche Element (130) mit dem Leiterelement (280) verbindet, wobei das Leiterelement (280) ein Leiterband ist, das um ein Ende des Verbindungselements (290) gewickelt ist.

5. Linearer Verdichter nach einem der Ansprüche 1 bis 4, wobei der erste Stator (220) einen mit einer Spule umwickelten Spulenwickelkörper (221) und einen an den Spulenwickelkörper (221) montierten Kern (222) aufweist, und die Steuereinheit das Ein- und Ausschalten der Stromversorgung in Bezug auf den Spulenwickelkörper (221) steuert, um ein einseitig gerichtetes Magnetfeld im Leiterelement (260, 270, 280) zu erzeugen.

6. Linearer Verdichter nach einem der Ansprüche 1 bis 5, wobei wenigstens ein Abschnitt des Leiterelements (260, 270, 280) zwischen dem ersten Stator und dem zweiten Stator (220, 240) positioniert ist.

7. Linearer Verdichter nach Anspruch 6, wobei der erste Stator (220) erste und zweite Spulenwickelkörper (221A, 221B), die mit einem Zwischenraum in einer Axialrichtung beabstandet sind und jeweils mit einer Spule umwickelt sind, und einen an die ersten und zweiten Spulenwickelkörper (221A, 221B) montierten Kern (222) aufweist, und die Steuereinheit eine Steuerung durchführt, um dem ersten und zweiten Spulenwickelkörper (221 A, 221 B) Ströme mit einer Phasendifferenz zuzuführen, um ein zweiseitig gerichtetes Magnetfeld im Leiterelement (260, 270, 280) zu erzeugen.

8. Linearer Verdichter nach Anspruch 7, wobei die Spule in die gleiche Richtung um die ersten und zweiten Spulenwickelkörper (221A, 221B) gewickelt ist, und ein Kondensator in Reihe zu einem der ersten und zweiten Spulenwickelkörper (221 A, 221 B) geschaltet ist.

9. Linearer Verdichter nach Anspruch 8, wobei die Steuereinheit eine Steuerung durchführt, um dem ersten und zweiten Spulenwickelkörper (221 A, 221B) Ströme mit einer Phasendifferenz von 90° zuzuführen.

10. Linearer Verdichter nach Anspruch 1, wobei die Steuereinheit eine Frequenz gemäß der Amplitude der Last variiert.

11. Linearer Verdichter nach Anspruch 10, wobei die Steuereinheit eine Amplitude einer an den ersten Stator angelegten Spannung gemäß der Amplitude der Last variiert.

12. Linearer Verdichter nach einem der Ansprüche 1 bis 11, wobei
die Federn (S1, S2) eine Vielzahl von Federn (S1, S2) sind,
an den ersten Stator (220) ein Strom angelegt wird, um das Leiterelement (260, 270, 280) elektromagnetisch anzuregen,
der zweite Stator (240) entsprechend dem ersten Stator (220) positioniert ist, so dass wenigstens ein Abschnitt des Leiterelements (260, 270, 280) in einem Raum zwischen dem ersten Stator und dem zweiten Stator (220, 240) positioniert werden kann, und
die Steuereinheit eine Amplitude und/oder Frequenz einer an den ersten Stator (220) angelegten Spannung gemäß einer Amplitude einer Last variiert, um eine Kühlkapazität gemäß der Last zu steuern.

13. Linearer Verdichter nach Anspruch 12, wobei die Steuereinheit die Amplitude der Spannung variiert, so dass mit zunehmender Last die Geschwindigkeitsverringerung des beweglichen Elements (130) relativ klein sein kann oder die das bewegliche Element (130) bewegende Kraft im Wesentlichen aufrechterhalten oder vergrößert werden kann.

14. Linearer Verdichter nach Anspruch 12, wobei die Steuereinheit die Frequenz variiert, so dass mit zunehmender Last die Geschwindigkeit des beweglichen Elements (130) zunehmen kann oder die das bewegliche Element (130) bewegende Kraft im Wesentlichen aufrechterhalten oder vergrößert werden kann.

## Revendications

1. Compresseur linéaire, comprenant :
un élément fixe (120) doté d'une espace de compression (P) ;
un élément mobile (130) qui est animé d'un mouvement linéaire de va-et-vient à l'intérieur de l'élément fixe (120) afin de comprimer un liquide réfrigérant ;
un ou plusieurs ressorts (S1, S2) installés pour soutenir élastiquement l'élément mobile (130) dans une direction de déplacement ;
un stator composé d'un premier stator (220) alimenté en courant et d'un second stator (240) espacé du premier stator (220) d'un certain intervalle ;
un élément conducteur (260, 270, 280) soumis à une induction électromagnétique d'un champ magnétique produit par le stator afin que l'élément mobile (130) soit animé d'un mouvement de va-et-vient ; et une unité de commande qui commande l'alimentation en courant en ce qui concerne le premier stator (220),
**caractérisé en ce que**,
lorsque l'élément mobile fonctionne au-delà d'une certaine vitesse, une vitesse de l'élément mobile et une force déplaçant l'élément mobile sont inversement proportionnelles à différents rapports selon une amplitude d'une charge.

2. Compresseur linéaire selon la revendication 1, comprenant en outre un élément de connexion (290) qui connecte l'élément mobile (130) à l'élément conducteur,
dans lequel l'élément conducteur (260) est un conducteur monté sur une extrémité de l'élément de connexion (290).

3. Compresseur linéaire selon la revendication 1 ou 2, comprenant en outre un élément de connexion (290) qui connecte l'élément mobile (130) à l'élément conducteur (270),
dans lequel l'élément conducteur est formé par un empilage en alternance d'une pièce de fer annulaire et d'un conducteur (270b), et est monté à une extrémité de l'élément de connexion (290).

4. Compresseur linéaire selon l'une quelconque des revendications 1 à 3, comprenant en outre un élément de connexion (290) qui connecte l'élément mobile (130) à l'élément conducteur (280), dans lequel l'élément conducteur (280) est une ligne conductrice enroulée autour d'une extrémité de l'élément de connexion (290).

5. Compresseur linéaire selon l'une quelconque des revendications 1 à 4, dans lequel le premier stator (220) comprend un corps d'enroulement de bobine (221) sur lequel est enroulée une bobine, et un noyau (222) monté sur le corps d'enroulement de bobine (221), et l'unité de commande commande la marche et l'arrêt de l'alimentation en courant en ce qui concerne le corps d'enroulement de bobine (221) afin de produire un champ magnétique unidirectionnel dans l'élément conducteur (260, 270, 280).

6. Compresseur linéaire selon l'une quelconque des revendications 1 à 5, dans lequel au moins une partie de l'élément conducteur (260, 270, 280) est positionnée entre le premier stator et le second stator (220, 240).

7. Compresseur linéaire selon la revendication 6, dans lequel le premier stator (220) comprend des premier et second corps d'enroulement de bobine (221A, 221B) espacés d'un intervalle dans une direction axiale et sur lesquels est enroulée respectivement une bobine, et un noyau (222) monté sur les premier et second corps d'enroulement de bobine (221A, 221B), et l'unité de commande effectue une commande pour fournir des courants présentant une différence de phase aux premier et second corps d'enroulement de bobine (221A, 221B) afin de produire un champ magnétique bidirectionnel dans l'élément conducteur (260, 270, 280).

8. Compresseur linéaire selon la revendication 7, dans lequel la bobine est enroulée dans la même direction autour des premier et second corps d'enroulement de bobine (221A, 221B), et un condensateur est connecté en série avec les premier et second corps d'enroulement de bobine (221A, 221B).

9. Compresseur linéaire selon la revendication 8, dans lequel l'unité de commande effectue une commande pour fournir des courants présentant une différence de phase de 90 ° aux premier et second corps d'enroulement de bobine (221 A, 221B).

10. Compresseur linéaire selon la revendication 1, dans lequel l'unité de commande fait varier une fréquence selon l'amplitude de la charge.

11. Compresseur linéaire selon la revendication 10, dans lequel l'unité de commande fait varier une amplitude d'une tension appliquée au premier stator selon l'amplitude de la charge.

12. Compresseur linéaire selon l'une quelconque des revendications 1 à 11, dans lequel
les ressorts (S1, S2) sont une pluralité de ressorts (S1, S2),
le premier stator (220) est soumis à un courant afin de produire une induction magnétique sur l'élément conducteur (260, 270, 280),
le second stator (240) est positionné de manière correspondante au premier stator (220) de sorte qu'au moins une partie de l'élément conducteur (260, 270, 280) puisse être positionnée dans un espace entre le premier stator et le second stator (220, 240), et
l'unité de commande fait varier une amplitude et/ou une fréquence d'une alimentation appliquée au premier stator (220) selon une amplitude d'une charge afin de commander une capacité de refroidissement selon la charge.

13. Compresseur linéaire selon la revendication 12, dans lequel l'unité de commande fait varier l'amplitude de la tension de sorte que la réduction de vitesse de l'élément mobile (130) puisse être relativement petite ou que la force déplaçant l'élément mobile (130) puisse être sensiblement maintenue ou augmentée avec l'augmentation de la charge.

14. Compresseur linéaire selon la revendication 12, dans lequel l'unité de commande fait varier la fréquence de sorte que la vitesse de l'élément mobile (130) puisse augmenter ou que la force déplaçant l'élément mobile (130) puisse être sensiblement maintenue ou augmentée avec l'augmentation de la charge.
